# EUROPÄISCHE PATENTANMELDUNG

(11) **EP 2 479 148 A1**
(43) Veröffentlichungstag der Anmeldung: **25.07.2012**
(21) Anmeldenummer: 11152023.5
(22) Anmeldetag: 25.01.2011
(51) Int. Cl.: C02F 5/10, C08K 5/09

(54) **Verfahren zur Reduktion der Spülkosten von Entwässerungssystemen**

(71) Anmelder: Kardag AG, 6072 Sachseln (CH)
(72) Erfinder: Wegmüller, Marcel Christian, 4125 Riehen (CH)
(74) Vertreter: Bremi, Tobias Hans

(57) **Zusammenfassung**

Beschrieben wird ein Verfahren zur Reduktion der Spülkosten von Entwässerungssystemen, welches dadurch gekennzeichnet ist, dass dem abfliessenden Wasser im Entwässerungssystem eine wirksame Menge eines Wirkstoffs zudosiert wird und dieser einen wirksamen Gehalt an Fruchtsäure enthält.

## Beschreibung

### TECHNISCHES GEBIET

Die Erfindung betrifft ein Verfahren zur Reduktion der Spülkosten von Entwässerungssystemen.

### STAND DER TECHNIK

Fast alle Gebäude besitzen ein Entwässerungssystem (EWS). Bei den Hochbauten verfügen vor allem die grossen Bauten wie Hochhäuser, Hotelanlagen, Einkaufszentren, Fussballplätze oder Wohnüberbauungen über nennenswerte Entwässerungssysteme. Bei Tiefbauten, z.B. Flugplätzen, Staumauern, Strassen, Bahnanlagen, Tunneln, gehören Entwässerungssysteme zur Standardausrüstung und sind überall anzutreffen. Gerade bei öffentlichen Infrastrukturanlagen wie z.B. Bahnhöfen, Flughafenanlagen, Strassen, Wasserkraftanlagen, Staumauern, Talsperren, Erddämmen, Stützmauern, Strassenbauten, Tunnelbauten, oder Hangentwässerungsanlagen wird viel Geld in den Bau langzeitig funktionstüchtiger Entwässerungssysteme investiert.

Bei der Entwässerung von Gebäuden fallen Wässer an, die gelöste Wasserinhaltsstoffe mitführen, die im Entwässerungssystem selbst ausfallen können. Durch die Veränderung der physikalischen Bedingungen beim Zuströmen der Wässer auf das Gebäude verändert sich die Kalklöslichkeit negativ, was zur Bildung von Verkrustungen in allen wasserführenden Teilen des Entwässerungssystems führt. Zudem erhöhen basische Baustoffe den pH-Wert dieser Wässer, was die Bildung der Verkrustungen ebenfalls stark begünstigt. Diese vorwiegend anorganischen Wasserinhaltsstoffe verursachen im unzugänglichen und zugänglichen Teil der Entwässerungssysteme oft harte Verkrustungen. Diese Verkrustungen verkleinern den Abflussquerschnitt der Entwässerungssysteme, so dass die Wassermengen nicht mehr frei abfliessen können und dadurch ein Rückstau gebildet wird, der zu grossen Schäden führen kann. Die zurzeit üblichen Verfahren zum Entfernen dieser Verkrustungen sind elektromechanische Reinigung sowie Hochdruckspülung oder Hochdruckfräsen mit Wasser. Diese Verfahren sind aufwendig, teuer und führen zu Betriebsunterbrüchen.

Nur der regelmässige Unterhalt dieser Entwässerungssysteme garantiert die dauerhafte Funktionstüchtigkeit dieser Anlagen. Der wichtigste Teil dieser Unterhaltsarbeiten besteht aus den regelmässigen Reinigungsarbeiten am EWS. Normalerweise werden dazu die Drainage- und Entwässerungsrohre innwendig gespült. Durch die anfallenden Wässer entstehen aber sehr oft harte bis sehr harte Verkrustungen, die fast immer aus Kalk bestehen. Das Entfernen dieser Kalkschichten ist zeitintensiv, aufwendig, und kostet sehr viel Geld. Oft lassen sich diese Verkrustungen mit konventionellen Hochdruckspülungen nicht mehr entfernen und es müssen andere Reinigungsverfahren eingesetzt werden. Zu diesen zählen Fräsen und oder Kettenschleudern. Diese Verfahren führen aber zu einem grossen Verschleiss des EWS und man sollte wenn immer möglich darauf verzichten. Der Verlust oder das Fehlen eines funktionstüchtigen Entwässerungssystems kann je nach Gebäude katastrophale Folgen für den Betrieb sowie für die Dauerhaftigkeit der Anlage nach sich ziehen.

Bei der Unterhaltung von Entwässerungssystemen fallen also hohe Kosten an. Der Unterhalt des Entwässerungssystem kann so teuer werden, dass sich einzelne Bauhemen dazu entschliessen, ohne Entwässerungssystem zu bauen d.h. auf ein Entwässerungssystem zu verzichten und stattdessen das Gebäude so stark auszubilden, dass der entstehende Wasserdruck aufgenommen werden kann, ohne Schäden in Kauf zu nehmen. Dies ist zwar deutlich teurer, scheint sich aber dennoch für gewisse Gebäude zu lohnen.

### DARSTELLUNG DER ERFINDUNG

Das Ziel der vorliegenden Erfindung war es deshalb u.a., ein Verfahren zu entwickeln, das es gestattet, die Spülkosten des Entwässerungssystems dauerhaft und signifikant zu reduzieren ohne dabei negative Auswirkungen für das betreffende Gebäude und/oder die Umwelt in Kauf nehmen zu müssen.

Ziel der Erfindung ist es letzten Endes, die genannten Spülkosten zu reduzieren. Dazu wird über ein Verteilsystem mit Dosieranlagen an einer oder mehreren Stellen des unzugänglichen oder zugänglichen Entwässerungssystems ein Wirkstoff, auf der Basis einer Fruchtsäure, punktuell oder flächendeckend in wässriger und/oder fester Form zugegeben. Dieser Wirkstoff vermischt sich auf dem nachfolgenden Fliessweg mit den Wässern im Entwässerungssystem und schützt dieses damit vor der Bildung von harten Verkrustungen.

Wegen der Zugabe des Wirkstoffs zum Wasser muss aber fast immer mit der Bildung von Bakterien- und Algenschichten innerhalb des behandelten Entwässerungssystems gerechnet werden. Diese Bakterien- und/oder Algenschichten reduzieren die Wirksamkeit der Wasserbehandlung und sind unerwünscht. Je nach der Stärke dieser Bio-Schichten können sie sogar zu einem Verschluss wichtiger Teile des Entwässerungssystems führen. Deshalb ist es vorteilhaft, wenn der genannte Wirkstoff gegebenenfalls, das heisst bei Problemen mit der "Biologie", in Kombination (parallel oder als Gemisch) mit einem besonders geeigneten Biozid eingesetzt wird. Dazu eignet sich insbesondere ein Biozid, das einen wirksamen Anteil an Wasserstoffperoxid und in schwierigen Fällen gleichzeitig oder alternativ einen wirksamen Anteil an z.B. kolloidalem Silber enthält. Die Zugabe erfolgt parallel zur Zugabe des Wirkstoffs kann aber auch alternierend zu dieser erfolgen. Durch die Zugabe beider Mittel erreicht man, dass sich keine Verkrustungen im Entwässerungssystem bilden und zudem das Entwässerungssystem frei von Bakterien - und/ oder Algenschichten ist. Die periodischen Unterhaltsarbeiten können danach viel einfach, effizienter, schneller und viel günstiger durchgeführt werden. In der Regel wird dabei eine Kostenreduktion von über 50% erreicht. Zudem entfallen gefährliche Arbeiten wie Fräsen und/oder Kettenschleudern im Entwässerungssystem, die zu einem frühzeitigen Verschleiss der Anlage führen.

Zu Beginn sind ein paar Definitionen notwendig. Das unzugängliche Entwässerungssystem umfasst die Elemente des Entwässerungssystems, die nach Fertigstellung des Gebäudes nicht mehr frei zugänglich sind, wie z.B. der umgebende Baugrund, aussen liegende Noppenbahnen bzw. -streifen, Drainagematten, Vliese, Drainagebohrungen, Sickerpackungen um die Drainagerohre herum, Sickerschichten, Öffnungen der Drainagerohre (aussen) und dgl.

Das zugängliche Entwässerungssystem eines Gebäudes beinhaltet die nach der Fertigstellung des Gebäudes frei zugänglichen Elemente des EWS wie z.B. die Drainagerohre (innen), Schächte, Schlammsammler, Wasserableitungen, Hauptentwässerungsleitungen und dgl.

Unter Wässer, die in einem EWS anfallen, soll, für die vorliegende Erfindung, die Summe aller möglichen Wasserzuflüsse, verstanden werden. Diese Zuflüsse können verschiedener Herkunft sein, wie beispielsweise Grund-, Sicker-, Karst- oder normale Bergwässer einzeln oder in Mischungen. Sie werden im Folgenden nur kurz "Wässer" genannt.

Die in einem EWS anfallenden Wässer weisen einen unterschiedlich hohen Gehalt an gelösten Wasserinhaltsstoffen auf. Diese vorwiegend anorganischen Wasserinhaltsstoffe verursachen oft harte Verkrustungen. Beim Eintritt dieser Wässer in Entwässerungssysteme verändern sich die physikalischen Bedingungen derart, dass die ursprünglich gelösten Wasserinhaltsstoffe harte, fest haftende Verkrustungen bilden, welche in amorpher oder kristalliner Form vorliegen können. Die Verkrustungen bestehen zum weitaus grössten Teil aus Kalk (meist < 95%), der aus den Wässern ausgeschieden wird, in Kombination mit unbedeutenden Mengen anderer Ionen wie Silicium, Magnesium, Barium, Eisen und dergleichen. In seltenen Fällen kann es zur Ansammlung von Eisenocker kommen, dessen Konsistenz gelartig ist und ebenfalls zu Verstopfungen im Entwässerungssystem führen kann. Die Verkrustungen entstehen einerseits durch den Druckabfall der Wässer beim Zuströmen auf das Gebäude und in das Entwässerungssystem und andererseits durch die pH-Werterhöhung der Wässer in Kontakt mit den heutigen Baustoffen wie Zementinjektionen, Beton und dergleichen. Daneben gibt es noch andere, i.d.R. untergeordnete Parameter, die die Verkrustungsbildung beeinflussen, wie z. B. die Temperatur oder die Mischung verschiedener Wässer.

Unabhängig von ihrer Bildungsart verkleinern diese harten, fest haftenden Verkrustungen die Abflussquerschnitte der Entwässerungssysteme oder schliessen sie in Extremfällen ganz. In der Folge können die anfallenden Wassermengen nicht mehr frei abfliessen, und es bilden sich Rückstaus, die grosse Schäden verursachen können. Diese Verknistungen reduzieren die Funktionstüchtigkeit des Entwässerungssystems. In Teilen des unzugänglichen Entwässerungssystems reduzieren oder zerstören die Verkrustungen die Funktionsfähigkeit der Entwässerung. Im unzugänglichen Teil des Entwässerungssystems, müssen die Verkrustungen, die dort auftreten, mit aufwendigen und kostenintensiven Sanierungsarbeiten entfernt werden, um die Funktionstüchtigkeit des Entwässerungssystems aufrechterhalten zu können. Im zugänglichen Teil des Entwässerungssystems sind regelmässige, kostenintensive Unterhaltsarbeiten zur Entfernung der Kalkverkrustungen in Intervallen von 3 Monaten bis 2 Jahren die Regel. Die Schäden, die durch die Verkrustungsbildung in Gebäudeentwässerungssystemen entstehen können, reichen von unerwünschten Wasserinfiltrationen ins Gebäudeinnere zu hohen Wasserdrücken auf die Gebäudeschale, Eisbildung auf Fahrbahnen, Vernässungen im Gebäudeinnern, verbunden mit der Gefahr von elektrischen Kurzschlüssen bei Elektroinstallationen und dergleichen. Zudem verringert der direkte Wasserkontakt generell die Dauerhaftigkeit der Gebäude. Speziell bei jenen Gebäuden, deren Stabilität von der einwandfreien Funktionstüchtigkeit des Entwässerungssystems abhängig ist, können Verkrustungen fatale Folgen haben.

Die zurzeit gebräuchlichsten Verfahren zum Entfernen dieser Verkrustungen sind: die elektromechanische Reinigung mit Spezialwerkzeugen wie beispielsweise Kanalfernsehen verbunden mit Robotik, sowie Hochdruckspülen oder Hochdruckfräsen mit Wasser. Diese Verfahren sind kostspielig, arbeitsintensiv und führen oft zu unerwünschten Betriebsunterbrüchen. Sind diese Arbeiten, aus bautechnischen Gründen, nicht möglich oder erzielen nicht das gewünschte Resultat, so kann die Funktionstüchtigkeit meist nur mit enorm aufwendigen Sanierungsarbeiten wiederhergestellt werden.

Die Einsatzmöglichkeiten für das vorgeschlagene Verfahren sind universell, verursachen die EWS doch auf der ganzen Welt hohe Kosten im Unterhalt.

Die bisherigen Lösungsansätze zur Reduktion der Spülkosten von Entwässerungssystemen lassen sich in zwei Kategorien einteilen. Einerseits die konstruktiven Massnahmen am Gebäude selbst und andererseits Massnahmen zur Verbesserungen der Leistungsfähigkeit der Reinigungsarbeiten. Als konstruktive Massnahmen seien erwähnt die Wahl von glattwandigen Rohren, in denen sich weniger Verkrustungen ansammeln, und die gleichzeitig einfacher zu reinigen sind oder die Anordnung von vielen Putzschächten um eine lückenlose Reinigung zu ermöglichen, oder die Wahl von Drainagerohren mit grosser Einlauffläche um die Funktionstüchtigkeit möglichst lange aufrecht erhalten zu können. Massnahmen zur Verbesserung der Leistungsfähigkeit der Reinigungsarbeiten sind in erster Linie Verbesserungen an den Reinigungsgerätschaften wie Spülköpfe, Schlauchleitungen, Kompressoren und dergleichen.

Auf diesen beiden Gebieten hat sich in den vergangenen 20 Jahren nur wenig bewegt und es scheint, als seien hier die Möglichkeiten nahezu ausgeschöpft.

Nun wurde ganz überraschend ein neuer Lösungsansatz gefunden, indem durch die Zugabe eines Wirkstoffs, der einen wirksamen Anteil einer geeigneten Fruchtsäure einzeln oder im Gemisch enthält, zu den Wässern im EWS, die Bildung von harten Verkrustungen praktisch vollständig verhindert werden kann. Der wirksame Anteil an Fruchtsäure im Wirkstoff beträgt bevorzugt mindestens 25% bezogen auf das Gesamtgewicht des Wirkstoffs.

Die Anwendung des erfindungsgemässen Verfahrens zur Behandlung von Wässern in Entwässerungssystemen kann in üblicher Form wie beispielsweise mittels flüssiger Zugabe des Wirkstoffs über eine Dosieranlage und Dosierleitung erfolgen. Dabei kann die Fruchtsäure einzeln oder im Gemisch in wässriger Form, dem sogenannten Wirkstoff, mittels einer Dosierpumpe und einer nachfolgenden Dosierleitung an geeigneter Stelle zum Wasser im Entwässerungssystem zugegeben werden. Auf dem nachfolgenden Fliessweg vermischt sich die wässrige Lösung mit dem Wasser im EWS und verhindert dadurch die Bildung von harten Verkrustungen.

Unter Fruchtsäuren verstehen wir einen Sammelbegriff für die in Obst vorkommenden organischen Hydroxycarbonsäuren und Dicarbonsäuren. Diese Substanzen müssen beim Einsatz in Lebensmitteln nicht als Zusatzstoff gekennzeichnet werden. Viele Fruchtsäuren sind α-Hydroxycarbonsäuren (AHA, von engl. α-Hydroxy-Acids) und einige Dicarbonsäuren. Manche zählen zu beiden Gruppen. Zu den Fruchtsäuren gehören Äpfelsäure, Zitronensäure, Fumarsäure, Gluconsäure, Glycolsäure, Mandelsäure, Milchsäure, Oxalsäure, Salicylsäure, α-Hydroxycaprylsäure und Weinsäure.

Besonders geeignet für das erfindungsgemässe Verfahren zur Verhinderung von Verkrustungen, insbesondere von Kalkverkrustungen in Entwässerungssystemen, ist die Milchsäure. Die Milchsäure besitzt bezogen auf das spezifische Gewicht das grösste Kalkauflösevermögen und kann gleichzeitig den bereits im Wasser gelösten Kalk am besten stabilisieren.

An erster Stelle steht dabei die Zugabe des Wirkstoffs in flüssiger Form mittels Dosieranlage und Dosierleitung. Die Einsatzkonzentrationen bewegen sich dabei von 0,5 bis 50 000 ppm (Konzentration in EWS an dessen Ende normalerweise). Die hohen Konzentrationsschwankungen ergeben sich aus dem Umstand, dass in der Regel nur eine Dosieranlage pro Gebäude eingesetzt wird und deshalb bei der Dosierstelle so viel Wirkstoff zugegeben werden muss, dass beim Ende des EWS noch eine ausreichende Wirkung erzielt wird. Ein vernünftiger Konzentrationsbereich des Wirkstoffs dürfte, am Ende des Entwässerungssystems, beim Einlauf in die öffentliche Kanalisation oder den Vorfluter, im Bereich zwischen 1 und 100 ppm liegen. Dabei wird das natürliche Gefälle des EWS ausgenutzt.

Neben der Möglichkeit, den Wirkstoff in flüssiger Form einzusetzen, kann der Wirkstoff auch zu Tabletten in fester Form verpresst werden. Dabei verstehen wir unter Tablette alle möglichen Formkörper mit einem Gewicht von 0,5 g bis 5 kg pro Stück. Das Verpressen der bevorzugt trocken kristallinen oder amorphen Fruchtsäuren zu Tabletten erfolgt gegebenenfalls mittels diverser Hilfsstoffe. Besonders geeignet als Hilfsstoffe im Sinne der vorliegenden Erfindung sind Fettsäuren, insbesondere Stearinsäure, Palmitinsäure oder Laurinsäure oder Hilfsstoffe, die u.a. ebenfalls kalkstabilisierende Eigenschaften aufweisen und ggf. zusätzlich die maschinelle Verarbeitung der Tabletten vereinfachen wie insbesondere feste Polycarbonsäuren und/oder wie z.B. Polymere von 2,5-Pyrrolidindion, beide in Pulverform.

Die Erfindung betrifft also auch Tabletten zur Einbringung des Wirkstoffs in das unzugängliche und/oder zugängliche Entwässerungssystem in fester Form, wobei der Wirkstoff dadurch gekennzeichnet ist, dass er einen wirksamen Gehalt an fester (kristallin/amorph) Milchsäure enthält. Einen Vorteil bildet dabei der relativ hohe Schmelzpunkt der Milchsäure und die Tatsache, dass die Milchsäure bei Normaltemperatur als reines Pulver vorkommt. Die Milchsäure kann als L(+)Milchsäure, allein oder in Mischung mit anderen Fruchtsäuren, vorliegen. Auch hier kann die Fruchtsäure durch feste Polycarbonsäure und/oder feste Polymere von 2,5-Pyrrolidindion ergänzt werden. Auch in den Tabletten kann zudem Silber in partikulärer Form als Biozid eingesetzt werden. Durch die konstante Zugabe des Wirkstoffs entweder durch das Dosiersystem bei flüssiger Zugabe oder durch die sukzessive Auflösung der Tabletten zum Wasser des EWS kann die Bildung von Verkrustungen verhindert werden. Dadurch reduzieren sich die Spülkosten des EWS um bis zu 80%.

In vielen Fällen muss aber gleichzeitig das EWS vor der Bildung von Bakterien- und/oder Algenschichten geschützt und dazu ein Biozid zugegeben werden, da ansonsten die Wirkung der Fruchtsäuren reduziert oder gar unwirksam wird.

Doch die Wahl eines geeigneten Biozids ist häufig äusserst schwierig, handelt es sich doch um Gebäude, deren Entwässerungssysteme Wasser aufnehmen und danach in aller Regel wieder an einen Vorfluter abgeben oder sogar an anderer Stelle wieder im Boden versickern lassen. Es werden deshalb sehr hohe Anforderungen an die Umweltverträglichkeit gestellt, wobei gleichzeitig eine gewisse Wirksamkeit des Biozids notwendig ist, und dies auch unter den schwierigen pH Bedingungen solcher Wässer.

Im Folgenden ein kurzer Abriss über das allgemeine Gebiet der Biozide.

Der Zusatz von Halogenen, wie Chlor, Brom und Jod, oder halogenabgebenden Verbindungen erfreut sich dank seiner einfachen Ausführungsform, dem niederen Preis und der leichten Verfügbarkeit der verwendeten Mittel sowie der guten keimtötenden Wirkung großer Beliebtheit. Nachteilig wirkt sich dabei der Eigengeschmack und -geruch dieser Halogene, die auftretende Geschmacksveränderung der damit vermischten Grundstoffe, das im allgemeinen basische pH, die verhältnismäßig kurze Wirkungsdauer und die Temperaturempfindlichkeit aus. Außerdem wirken diese Stoffe karzinogen und mutagen, können Hautreizungen hervorrufen und Werkstoffe verschiedener Art angreifen. Die Verwendung von Ozon und Chlordioxid führt zwar zu einer verblüffend raschen und guten Keimtötung, die Wirkung verpufft jedoch rasch. Diese Mittel können in hohen Dosen außerdem sehr gefährlich sein. Auch sie sind temperaturempfindlich, karzinogen und mutagen und erfordern außer einer äußerst sorgfältigen Handhabung kostspielige Einrichtungen. Sie eignen sich daher nur für ein sehr beschränktes Anwendungsgebiet. Als völlig geruchsfreie und keine Reizung von Schleimhäuten usw. verursachende Desinfektionsmittel wurden ferner Kupfersalze, insbesondere Kupfersulfat und Kupferchlorid vorgeschlagen. Diese Verbindungen weisen eine mittlere, nur kurz anhaltende Keimtötungsgeschwindigkeit auf, verbinden sich leicht mit anderen Stoffen und sind, insbesondere das Chlorid, ebenfalls als karzinogen und mutagen bekannt.

Ein weit verbreitetes, geruchfreies und mit keinerlei Gefährdung der Gesundheit behaftetes Verfahren ist das sogenannte Katadynverfahren und ähnliche, die keimtötende Wirkung von Silberionen ausnützende Verfahren. Dieses sehr langsam wirkende Verfahren ist wegen seines hohen Preises wiederum in seiner Anwendung beschränkt.

Ferner wäre noch die UV-Bestrahlung zu erwähnen, welche den Vorteil hat, dass keine Beimischung eines Fremdstoffes erfolgt und eine hervorragende Keimtötung bewirkt wird, die allerdings nicht anhält. Außer großen und kostspieligen Einrichtungen benötigt dieses Verfahren aber auch sehr viel elektrische Energie.

Nun wurde überaschenderweise gefunden, dass sich eine wässrige Lösung, die einen wirksamen Gehalt an Wasserstoffperoxid enthält, erstaunlicherweise als Biozid für Entwässerungssysteme im Zusammenhang mit dem vorgeschlagenen Verfahren eignet. Wasserstoffperoxid zerfällt, insbesondere im basischen sehr rasch zu Wasser und Sauerstoff und hinterlässt keine sonstigen Zersetzungsprodukte. Deshalb ist es umso erstaunlicher, dass auch bei erhöhten pH-Werten der Wässer in Entwässerungssystemen dieses Biozid genügend lange aktiv bleibt und seine Wirkung über den ganzen Fliessweg des EWS aufrechterhalten kann. In reiner Form eignet sich Wasserstoffperoxid aber nicht üblicherweise zur Anwendung in einem Entwässerungssystem. In reiner Form ist Wasserstoffperoxid zu gefährlich, denn es ist ein bekannter Brandbeschleuniger und gilt als Gefahrengut, was die Handhabung und Anwendung schwierig macht. Der ideale Gehalt an Wasserstoffperoxid in einem Biozid, das bedenkenlos anzuwenden ist, liegt zwischen 1% und 25%. Dabei muss das Wasserstoffperoxid aber mit einer Säure z.B. Salpeter- oder Phosphorsäure stabilisiert werden. Ist die Wirkung des Wasserstoffperoxids zu gering, kann kolloidales Silber zur dieser wässrigen Lösung hinzugefügt werden.

Dies geschieht beispielsweise dadurch, dass man mit einer anorganischen Säure, wie beispielsweise Phosphorsäure, auf einen pH von < 1,6 eingestelltes destilliertes oder vollentsalztes Wasser bei einer Temperatur von 50 bis 60° C mit einem Silbersalz oder einem Komplex desselben in einer Menge von 100 ± 5 g Ag pro Liter Wasser vermischt, das Gemisch bei 25 bis 30° C mit der zur Einstellung des pH eingesetzten Säure in solcher Menge versetzt, dass die Gesamtmenge dieser Säure mindestens äquimolar mit der vorhandenen Silbermenge ist, dass man die erhaltene Lösung bei 20 bis 25° C mit dem organischen Stabilisator vermischt und, gegebenenfalls nach Zusatz von Gelatine, homogenisiert. Dieses Konzentrat lässt sich mit 35 bis 50 gewichtsprozentigem Wasserstoffperoxid innerhalb weiter Grenzen mischen. Üblicherweise erfolgt das Mischen mit 50%igem H2O2 und zwar in einem Volumenverhältnis von 1:99 bis 1:199 falls ein Silbersalz verwendet wird. Bei einem Verhältnis von über 1:199 verliert das Produkt die verstärkende Wirkung der beiden desinfizierenden Komponenten Silber und Wasserstoffperoxid. Bei einem Verhältnis von weniger als 1:99 besteht die Möglichkeit, dass sich Silber im Gemisch ausscheidet. Das innerhalb der obigen Grenzen gemischte Produkt ist mindestens 2 Jahre bedenkenlos lagerfähig.

Diese Kombination ist erstaunlich, wirkt sie doch im Rahmen des vorgeschlagenen Verfahrens um ein mehrfaches besser als die einzelnen Komponenten, das Wasserstoffperoxid und/oder das Silber, für sich allein. Wir schätzen, dass der Bedarf an Wasserstoffperoxid in einem geeigneten Biozid rund 5-mal geringer ist, wenn darin Silber in kolloidaler Form enthalten ist. Der Gesamtsilbergehalt sollte in einer wässrigen Lösung die 10% Wasserstoffperoxid enthält rund 0,01% bis 0,5% enthalten.

Zum Schutz der Tabletten vor Bakterien- Pilz- Algen oder sonstigem biologischen Befall kann Silber in kolloidaler Form zugefügt werden. Die wirksamen Konzentrationen bewegen sich dabei zwischen 5 und 500 ppm bezogen auf die gesamte Tablette.

Weitere Ausführungsformen sind in den abhängigen Ansprüchen angegeben.

### BESCHREIBUNG BEVORZUGTER AUSFÜHRUNGSFORMEN

Um die Wirksamkeit der Milchsäure als besonders geeigneten Wirkstoff gegenüber anderen Fruchtsäuren zu testen, wurden einige Experimente durchgeführt. Als erstes Experiment wurde Mineralwasser eingedampft:
In einem Erlenmeier wurde 11 Mineralwasser (Typ: Valserwasser ohne Kohlensäure) mit 20 ppm Zitronensäuresäure versetzt (90%-Lösung) und eingedampft. Das Resultat war eine milchige Lösung (1 dl) mit wenig harten Kalkverkrustungen an den Glaswänden.

Danach wurde die gleiche Menge Valserwasser mit 20 ppm Milchsäure (92%, als Lösung) versetzt und bis auf 1 dl eingedampft. Das Resultat war eine klare Flüssigkeit mit gleich vielen Kalkverkrustungen an den Glaswänden, wie bei der Zitronensäure, die sich aber etwas leichter entfernen liessen. Ohne die Zugabe eines Wirkstoffs setzte sich sehr viel mehr Kalk an, der nur sehr schwer zu entfernen war. Die Milchsäure war bei diesem Experiment der Zitronensäure überlegen. Beide Substanzen wurden in der handelsüblichen Form zugesetzt.

Als zweites Experiment wurde der pH-Wert von Mineralswasser nach oben verschoben, bis es zur Ausfällung von Kalkkristallen kam.

In einem Erlenmeier wurde wiederum 11 Valserwasser mit 20 ppm Zitronensäure (90%-Lösung) versetzt. Danach wurde 1 normale Natriumhydroxidlösung tropfenweise zugesetzt. Nach der Zugabe von 10 Tropfen wurde das Mineralwasser trübe, ohne dass die Kristalle zu erkennen waren. Nach 15 Tropfen wurden die Kristalle sichtbar und liessen sich auch durch langes Rühren nicht wieder auflösen. Das gleiche Experiment mit 20 ppm Milchsäure (92%-Lösung) ergab, dass
selbst die Zugabe von 15 Tropfen Natriumhydroxidlösung nur eine leichte Trübung, aber noch keine sichtbaren Kristalle verursachte. Ohne Wirkstoff wurde das Mineralwasser durch die Zugabe von 20 Tropfen Natriumhydroxidlösung milchig und es bildeten sich grosse flächige Kalkkristalle. Bei diesem Experiment war die Milchsäure der Zitronensäure weit überlegen, und es lässt sich daraus schliessen, dass sich in der Praxis, bei ähnlich gelagerten Fällen (pH-Werterhöhung durch die Baustoffe), durch die Zugabe gleicher Mengen von Milchsäure (in der handelsüblichen Form, als 92%-Lösung) anstelle von Zitronensäure(in der handelsüblichen Form 90%-Lösung) zu den Wässern, in Zukunft nur noch wenig oder gar kein Kalkschlamm mehr in den Entwässerungssystemen ablagern sollte.

Das dritte Experiment wurde in der Praxis im EWS einer Gebäudeüberbauung in Wetzikon (Gemeinde im Kanton Zürich in der Schweiz) durchgeführt. Im Keller des Gebäudes steht seit rund 2 Jahren eine Dosieranlage in Betrieb. Die Anlage dosiert dort mittels Pumpe Zitronensäure (90%-Lösung) zum Wasser des Entwässerungssystems. Das Wasser fliesst kontinuierlich, von der höchsten Stelle des EWS im Norden, nach Süden und verlässt das Areal nach rund 200 Meter und mündet in der Kanalisation. Die Dosierstelle wurde so gewählt, dass sie unter Ausnutzung des Wasserflusses, möglichst am Anfang, d.h. an der höchsten Stelle des Entwässerungssystems, steht, aber auch in Trockenzeiten immer noch ein konstanter Wasserfluss gewährleistet bleibt. Die Dosierstelle befindet sich deshalb rund 10 Metern südlich des Beginns des EWS. Nach weiteren 10 Metern, fliesst sehr stark alkalisches Hangwasser aus dem Umgebungsgestein (zementstabilisiert) zum Wasser der Entwässerungsleitung und verursacht dort, als Folge der pH-Werterhöhung, sehr starke Kalkverkrustungen in der Leitung, die erst beim Einlauf in die Kanalisation abklingen. Bisher wurde eine Menge von rund 20 Liter Zitronensäure (90% Wirkstoffanteil) pro Monat zum Hangwasser zudosiert. Dadurch konnte die Verkrustungsbildung in diesem Bereich zum grössten Teil verhindert werden. Dennoch mussten in diesem Abschnitt, in einem Intervall von 2 Jahren, der neugebildete Kalkschlamm und der neue harte Kalk regelmässig entfernt und abtransportiert werden. Die Kosten für eine solche Reinigung belaufen sich jedes Mal auf rund CHF 10 000.-.

Nun wurde anstelle von Zitronensäure, Milchsäure (92%-Lösung) in einer Menge von ebenfalls 20 Liter pro Monat zudosiert. Um das Resultat besser beurteilen zu können, wurden gleichzeitig, mit dem Beginn der Milchsäurezugabe, 5 Versuchssteine in der Leitung ausgelegt. Das Resultat war eindrücklich.

Bereits nach 7 Tagen konnte beobachtet werden, dass im Bereich der Dosierstelle die alten harten Kalkverkrustungen verschwunden waren. Im weiteren Verlauf der Leitung konnte beobachtet werden, dass sich die zugesetzte Milchsäure deutlich in die bereits bestehenden Kalkverkrustungen eingegraben hat. Von den 5 Kontrollsteinen die in der Rigole als Köder ausgelegt wurden, zeigt nur der nördlichste Stein leichte Spuren von weissem Kalk.

Nach 14 Tagen war die Auflösung der jungen weichen Kalkschichten bereits abgeschlossen und der alte harte Kalk der sich trotz regelmässiger Reinigung nicht entfernen liess, kam zum Vorschein. Nun war auch der letzte Versuchsstein frei von Verkrustungen. Dies bedeutet, dass die Milchsäure den leichtlöslichen Kalk im Bereich der Dosierstelle vollständig abgetragen hat und nun genügend Milchsäure auch beim letzten Versuchsstein zur Verfügung steht. Die Milchsäure bahnt sich sozusagen den Weg durch die alten Verkrustungen.

Dies bedeutet einen ganz unglaublichen Fortschritt gegenüber der bisherigen Lösung. Die Länge des Versinterungsbereichs konnte von 200 Meter auf 0 Meter reduziert werden. Die bisherige Breite der jährlichen Verkrustungen betrug an der schlimmsten Stelle rund 20 cm, bei einer Stärke von 10 cm.

Leider haben wir auch bei diesem Bauwerk mit starkem biologischem Befall zu kämpfen. Die Fruchtsäuren sind ganz allgemein sehr gut biologisch abbaubar und können auch als "Futter" für allerlei Lebewesen bezeichnet werden. Wir konnten so Algen, Pilze aber auch verschiedene Bakterien beobachten. Nicht jeder Bauherr schätzt diesen Befall und so mussten wir unser erfindungsgemässes Biozid austesten. Wir nahmen dazu eine Lösung die rund 7,5% Wasserstoffperoxid und gleichzeitig 0,075% Silber in kolloidaler Form enthält. Durch die konstante Zugabe des Biozids zur Entwässerungsleitung in einer Konzentration von rund 20 ppm konnte keine Wirkung erzielt werden. Es erstaunte umso mehr als die Bakterienfäden, die wir vor der Behandlung entfernt haben, bereits nach 5 Tagen wieder deutlich nachgewachsen waren. Dabei muss erwähnt werden, dass dabei die Zugabe der Milchsäure nicht unterbrochen wurde. Nun haben wir die Art und Weise der Dosierung umgestellt. Wir sind dazu übergegangen und haben die Milchsäure 23 h lang ohne Unterbruch zudosiert, dann wurde diese Anlage abgestellt und stattdessen das Biozid in weit höher Konzentration von rund 500 ppm, während einer Stunde lang, zudosiert. Dieses Intervall wurde beibehalten und bereits nach 2 Tagen war die vorher mit Bakterienschlamm zugedeckte Entwässerungsleitung völlig frei von Bakterien. Es hat sich also als äusserst vorteilhaft erwiesen während der Biozidbehandlung die Milchsäurebehandlung zu unterbrechen und zudem nicht konstant zu dosieren sondern schockartig in Intervallen. Natürlich wäre auch eine konstante Dosierung möglich aber eben mit einem weit höheren Mittelverbrauch der sicher etwa 5 mal höher liegen dürfte. Ist die Leitung erst einmal frei von biologischem Befall kann das Dosierintervall auf eine Stunde pro Woche erweitert werden. Die zu dosierenden Konzentrationen bewegen sich dabei für das beschriebene Biozid, bei Intervalldosierung, zwischen 50 und 500 ppm. Ohne Silberanteil im Biozid erhöht sich der Biozidverbrauch um ca. das 5-fache.

## Patentansprüche

1. Verfahren zur Reduktion der Spülkosten von Entwässerungssystemen, **dadurch gekennzeichnet, dass** dem abfliessenden Wasser im Entwässerungssystem eine wirksame Menge eines Wirkstoffs zudosiert wird und dieser einen wirksamen Gehalt an Fruchtsäure enthält.

2. Verfahren nach Anspruch 1, **dadurch gekennzeichnet, dass** der Wirkstoff und/oder Fruchtsäure die Bildung von neuen organischen und/oder anorganischen Verkrustungen, insbesondere in Form von Kalkablagerungen, verhindert und/oder den Abbau von bestehenden organischen und/oder anorganischen Verkrustungen, insbesondere in Form von Kalkablagerungen, induziert oder fördert, und/oder dass durch den Wirkstoff die Auflösung bereits bestehender Kalkverkrustungen und gleichzeitig die Bildung neuer Kalkverkrustungen verhindert werden.

3. Verfahren nach Anspruch 1 oder 2, **dadurch gekennzeichnet, dass** der Wirkstoff in einer Konzentration zwischen 0,5 und 50 000 g/m3 an zu behandelndem Wasser zugegeben wird.

4. Verfahren nach einem der vorhergehenden Ansprüche, **dadurch gekennzeichnet, dass** als Wirkstoff eine Fruchtsäure ausgewählt aus der Gruppe: Äpfelsäure, Zitronensäure, Fumarsäure, Gluconsäure, Glycolsäure, Mandelsäure, Milchsäure, Oxalsäure, Salicylsäure, α-Hydroxycaprylsäure und Weinsäure eingesetzt wird, wobei bevorzugtermassen Milchsäure allein oder im Gemisch mit anderen Fruchtsäuren zugegeben wird, insbesondere als Wirkstoff im wesentlichen ausschliesslich L(+)Milchsäure verwendet wird..

5. Verfahren nach einem der vorhergehenden Ansprüche, **dadurch gekennzeichnet, dass** der Wirkstoff in flüssiger, bevorzugt wässrig gelöster Form mittels einer Dosieranlage, vorzugsweise über eine Einspeisleitung unter Ausnutzung des natürlichen Gefälles des Gebäudes in den unzugänglichen und/oder zugänglichen Teil des Entwässerungssystems erfolgt, oder in fester Form mittels Tabletten dem unzugänglichen und/oder zugänglichen Teil des Entwässerungssystems zugegeben wird.

6. Verfahren nach einem der vorhergehenden Ansprüche, **dadurch gekennzeichnet, dass** dem abfliessenden Wasser weitere Zusätze, insbesondere Biozide, zugegeben werden.

7. Verfahren nach Anspruch 7, **dadurch gekennzeichnet dass** als weiterer Zusatz ein Biozid mit einem wirksamen Gehalt an Wasserstoffperoxid von 1% bis 25%, in wässriger Form, konstant oder in Intervallen zudosiert wird.

8. Verfahren nach Anspruch 7 oder 8, **dadurch gekennzeichnet dass** das Biozid kolloidal gelöstes Silber in einer Menge zwischen 0,01% und 0,5% enthält.

9. Verfahren nach einem der vorhergehenden Ansprüche, **dadurch gekennzeichnet, dass** die Zugabemenge des Wirkstoffs in Abhängigkeit von der am Ende des Entwässerungssystems anfallenden Wassermenge und/oder Wirkstoffkonzentration gesteuert wird.

10. Verfahren nach einem der vorhergehenden Ansprüche, **dadurch gekennzeichnet, dass** als Wirkstoff ausschliesslich eine im Wesentlichen 80-95%ige wässrige Lösung von Milchsäure, bevorzugt in technischer Qualität, verwendet wird, ggf. in Kombination mit einem Biozid.

11. Verfahren nach einem der vorhergehenden Ansprüche, **dadurch gekennzeichnet, dass** die Zugabe des Wirkstoffs unter Verwendung von Tabletten, die einen wirksamen Anteil an Fruchtsäuren, gegebenenfalls in Kombination mit Polycarbonsäuren und/oder Polymeren von 2,5-Pyrrolidindion in Pulverform, enthalten, in den unzugänglichen und/oder zugänglichen Teil des Entwässerungssystem erfolgt.

12. Verfahren nach Anspruch 11, **dadurch gekennzeichnet dass** die Tabletten als Biozid kolloidales Silber in Mengen von 5 bis 500 ppm enthalten.

13. Verfahren nach einem der Ansprüche 1 bis 12, **dadurch gekennzeichnet, dass** sich das Entwässerungssystem in einem Tunnel befindet oder an einem Tunnel angeschlossen ist.

14. Verfahren nach einem der Ansprüche 1 bis 13, **dadurch gekennzeichnet, dass** sich das Entwässerungssystem in einer Wohnüberbauung befindet oder an eine solche angeschlossen ist.

15. Tablette zur Einbringung des Wirkstoffs nach Anspruch 11 oder 12, **dadurch gekennzeichnet, dass** der Wirkstoff einen wirksamen Gehalt an Milchsäure enthält, vorzugsweise in Kombination mit einem Biozid wie beispielsweise kollodialem Silber und/oder vorzugsweise in Kombination mit Polycarbonsäuren und/oder Polymeren von 2,5-Pyrrolidindion.
